# EUROPÄISCHE PATENTSCHRIFT

(11) **EP 1 621 672 B1**
(45) Veröffentlichungstag und Bekanntmachung des Hinweises auf die Patenterteilung: **10.04.2013**
(21) Anmeldenummer: 05015182.8
(22) Anmeldetag: 13.07.2005
(51) Int. Cl.: E01C 11/22

(54) **Rinnensteinsystem**
Gutter blocks system
Système de pavés de caniveau

(30) Priorität: 30.07.2004 DE 202004012055 U
(43) Veröffentlichungstag der Anmeldung: 01.02.2006
(73) Patentinhaber: KRONIMUS AG, 76473 Iffezheim (DE)
(72) Erfinder: Maier, Guido, 76547 Sinzheim (DE)
(74) Vertreter: Otten, Roth, Dobler & Partner

(56) Entgegenhaltungen:
- EP-A- 1 088 941
- DE-U1- 8 814 520
- DE-U1- 9 205 884
- GB-A- 320 381

## Beschreibung

Die Erfindung betrifft ein Rinnensteinsystem gemäß dem Oberbegriff des Anspruchs 1.

Aus der DE 85 09 982 U1 ist ein Rinnensteinsystem mit geraden und gebogenen Rinnensteinelementen bekannt, welche sich über eine Breite einer zu erstellenden Rinne erstrecken, wobei die Rinnensteinelemente Scheinfugen aufweisen. Nachteilig an einem derartigen Rinnensteinsystemen ist, dass die rinnenförmige Ausbildung der Rinnensteinelemente zu einer Schwächung des Rinnesteinelements in einem mittleren Bereich führt und die oberen Längsseitenkanten durch die spitzwinklig aufeinander zulaufende Seiten- und Oberflächen ungewünscht empfindlich sind.

Weiterhin sind aus der GB 320 381 Straßenrandbegrenzungen bekannt welche ein Rinnensystem bilden, das gerade und gebogene Rinnensteinelemente aufweist, welche sich über eine Breite einer zu erstellenden Rinne erstrecken, wobei das Rinnensteinsystem wenigstens drei unterschiedliche Rinnensteinelemente aufweist, wobei jedes Rinnensteinelement eine ebene Oberseite aufweist, welche sich über die gesamte Breite der zu erstellenden Rinne zu einer Seitenfläche des Rinnesteinelements neigt, wobei das Rinnensteinsystem gerade Rinnensteinelemente umfasst und wobei das Rinnensteinsystem trapezähnliche Rinnensteinelemente umfasst, deren Oberseite zu einem inneren kurzen Bogenabschnitt geneigt ist. Nachteilig an einem derartigen Rinnensteinsystem ist, dass durch dieses nur ein Teil der denkbaren Verlegsituationen realisierbar ist.

Aufgabe der Erfindung ist es, ein Rinnensteinsystem vorzuschlagen, welches auf alle Weg- bzw. Straßenverläufe anpassbar ist.

Die Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Das erfindungsgemäße Rinnensteinsystem weist Rinnensteinelemente auf, bei welchen sich die ebene Oberfläche des Rinnensteinelements über die gesamte Breite der zu erstellenden Rinne zu einer Längsseitenkante bzw. Seitenfläche des Rinnesteinelements neigt. Hierdurch wird einerseits eine durch eine Durchbiegung bzw. Wölbung entstehende, das Element schwächende Kerbwirkung vermieden und andererseits bei gleicher Neigung der Oberseite des Rinnesteinelements das spitzwinklige Zulaufen von Oberseite und Seitenfläche an einer der Längskanten gänzlich vermieden und an der anderen Längskante abgeschwächt. Es entsteht ein Rinnensteinsystem mit robusten Rinnensteinen.

Die Erfindung sieht vor, das Rinnensteinsystem aus wenigstens drei unterschiedlichen Rinnensteinelementen aufzubauen. Auf dieser Basis kann das Rinnensteinsystem an alle Weg- bzw. Straßenverläufe angepasst werden. Dies ist insbesondere möglich, wenn das Rinnensteinsystem gerade Rinnensteinelemente und trapezähnliche bzw. gebogene Rinnensteinelemente umfasst, deren Oberfläche zu einer langen Grundlinie bzw. zu einer kurzen Grundlinie geneigt ist. Hierbei weisen die geraden Rinnensteinelemente eine Länge von 10 cm bis 30 cm und insbesondere etwa 20 cm auf, die äußeren trapezähnlichen Rinnensteinelemente besitzen einen äußeren Bogenabschnitt mit einer Bogenlänge (EaLB) von etwa 23 cm und einen inneren Bogenabschnitt mit einer Bogenlänge (Ealb) von etwa 20 cm und die inneren trapezähnlichen Rinnensteinelemente besitzen einen äußeren Bogenabschnitt mit einer Bogenlänge (EiLB) von etwa 20 cm und einen inneren Bogenabschnitt mit einer Bogenlänge (Eilb) von etwa 17 cm. Derartige Abmessungen erlauben die Ausbildung unterschiedlichster Radien links uns rechts einer Fahrbahn, wenn gerade und gebogene Rinnensteinelemente in entsprechender Abfolge abwechselnd verlegt werden, wobei durch die geraden Rinnensteinelemente eine beliebige Vergrößerung des Kurvenradius möglich ist. Die inneren gebogenen Rinnensteinelemente sind zur Begrenzung von Innenkurven einer Fahrbahn vorgesehen. Die äußeren gebogenen Rinnensteinelemente finden für die Begrenzung von Außenkurven einer Fahrbahn Verwendung.

Gemäß der Erfindung ist es vorgesehen, den inneren Bogenabschnitt des äußeren trapezähnlichen Rinnesteinelements und den äußeren Bogenabschnitt des inneren trapezähnlichen Rinnensteinelements auf einen Radius von etwa 200 cm anzupassen. Diese erlaubt bei einer ausschließlichen Aneinanderreihung von gebogenen Rinnensteinelementen die Ausbildung von für den Straßen- und Wegebau hinreichend engen Radien.

Erfindungsgemäß lässt sich mit Rinnensteinelementen, welche an Stoßseiten zu benachbarten Rinnesteinelementen jeweils einen Vorsprung und einen Rücksprung aufweisen, ein guter Zusammenhalt zwischen den einzelnen Rinnensteinelementen realisieren.

Schließlich sieht die Erfindung vor, die Scheinfugen der Rinnesteinelemente des Rinnensteinsystems etwa 3 mm bis 5 mm tief auszubilden, um neben einer ansprechenden Optik bei geringen Wassermengen auch eine Entwässerung über die Scheinfugen zu ermöglichen.

Weitere Einzelheiten der Erfindung werden in der Zeichnung anhand von schematisch dargestellten Ausführungsbeispielen beschrieben.

Hierbei zeigt:
- Figur 1a - 1b: eine Draufsicht auf ein gerades Rinnensteinelement (Eg) und einen Schnitt durch dieses;
- Figur 2a - 2b: eine Draufsicht auf ein äußeres trapezähnliches bzw. gebogenes Rinnensteinelement (Ea) mit einer Neigung zu einem äußeren Bogenabschnitt und einen Schnitt durch dieses;
- Figur 3a - 3b: eine Draufsicht auf ein inneres trapezähnliches bzw. gebogenes Rinnensteinelement (Ei) mit einer Neigung zu einem inneren Bogenabschnitt und einen Schnitt durch dieses;
- Figur 4:: eine Draufsicht auf eine aus geraden Rinnenelementen verlegte Rinne;
- Figur 5:: eine Draufsicht auf eine ausschließlich aus gebogenen Rinnensteinelementen (Ea) verlegte gekrümmt verlaufende Rinne und
- Figur 6:: eine Draufsicht auf eine leicht gekrümmt verlaufende Rinne aus abwechselnd verlegten geraden und gebogenen Rinnensteinelementen (Eg, Ea).

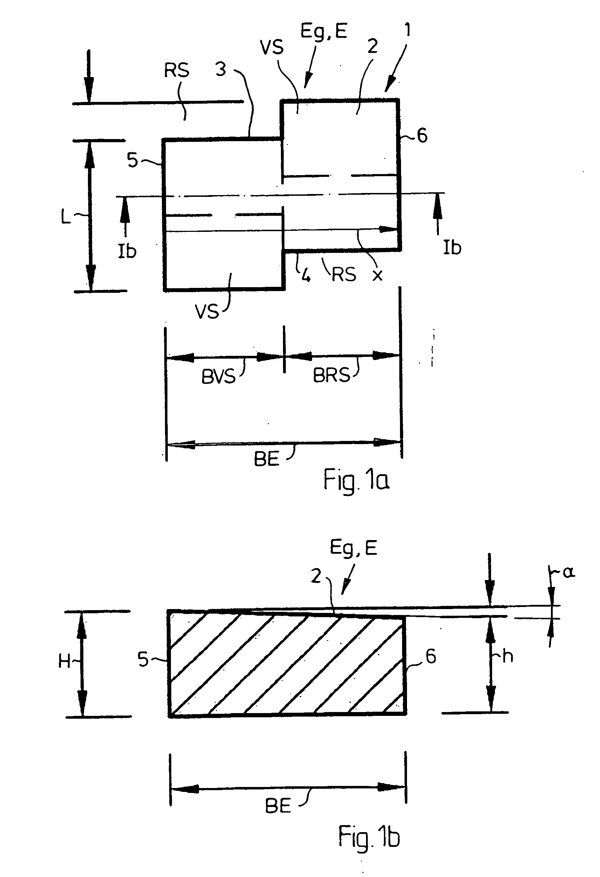

Die Figuren 1a bis 6 zeigen drei Rinnensteinelement-Typen E eines Rinnensteinsystems 1.

In der Figur 1a ist eine Draufsicht auf ein gerades Rinnensteinelement Eg eines Rinnensteinsystems 1 dargestellt. Das Rinnensteinelement Eg weist eine Oberseite 2, zwei Stoßseiten 3, 4 und zwei Seitenflächen 5, 6 auf. Weiterhin weist das Rinnensteinelement Eg eine Länge L auf. Die Oberfläche 2 des Rinnensteinelements Eg neigt sich mit einem Neigungswinkel 5° > α > 1° und insbesondere α = 2,5° von der Seitenfläche 5 zur Seitenfläche 6 in eine Richtung x (siehe Figur 1b). An den Stoßflächen 3, 4 ist jeweils ein Vorsprung VS und ein Rücksprung RS ausgebildet.

Die Figur 1b zeigt einen Schnitt durch das in der Figur 1a dargestellte Rinnesteinelement Eg entlang einer Schnittlinie Ib-Ib. Dieses weist eine Breite BE auf.

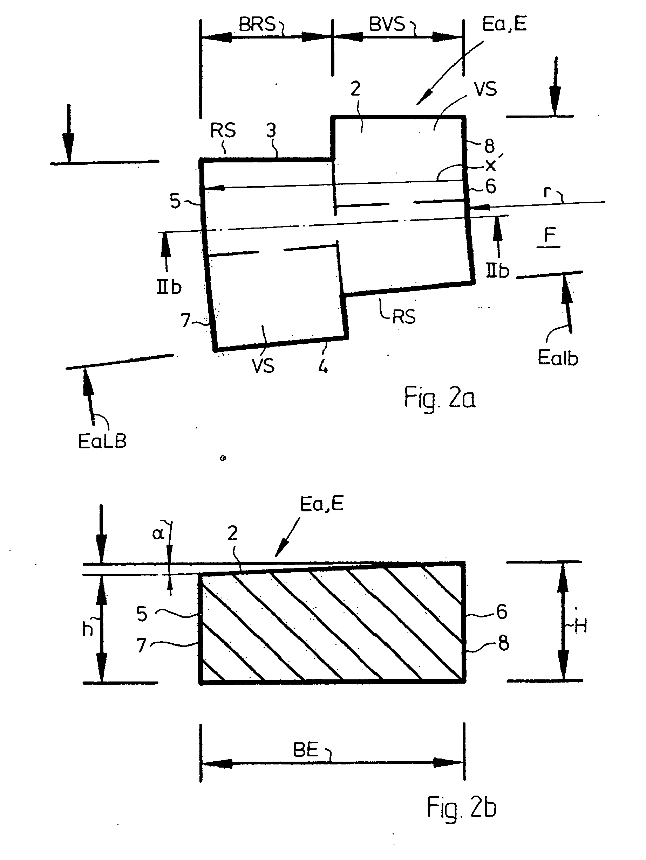

In der Figur 2a ist eine Draufsicht auf ein in Draufsicht trapezähnliches bzw. gebogenes äußeres Rinnensteinelement Ea eines Rinnensteinsystems 1 dargestellt. Das Rinnensteinelement Ea weist eine Oberseite 2, zwei Stoßseiten 3, 4 und zwei Seitenflächen 5, 6 auf. Weiterhin weist das Rinnensteinelement Ea einen äußeren Bogenabschnitt 7 und einen inneren Bogenabschnitt 8 mit Bogenlängen EaLB = 22,58 cm bzw. Ealb = 19,63 cm auf. Die Oberfläche 2 des Rinnensteinelements Ea neigt sich mit einem Neigungswinkel 5° > α > 1° und insbesondere α = 2,5° von der Seitenfläche 6 zur Seitenfläche 5 bzw. zum langen Bogenabschnitt 7 in eine Richtung x'(siehe auch Figur 2b). An den Stoßflächen 3, 4 ist jeweils ein Vorsprung VS und ein Rücksprung RS ausgebildet. Die gebogene Seitenfläche 6, welche an eine Fahrfläche F angrenzt weist einen Radius r = 2 m auf.

Die Figur 2b zeigt einen Schnitt durch das in der Figur 2a dargestellte Rinnesteinelement Ea entlang einer Schnittlinie IIb-IIb. Dieses weist eine dem geraden Rinnensteinelement Eg entsprechende Breite BE auf.

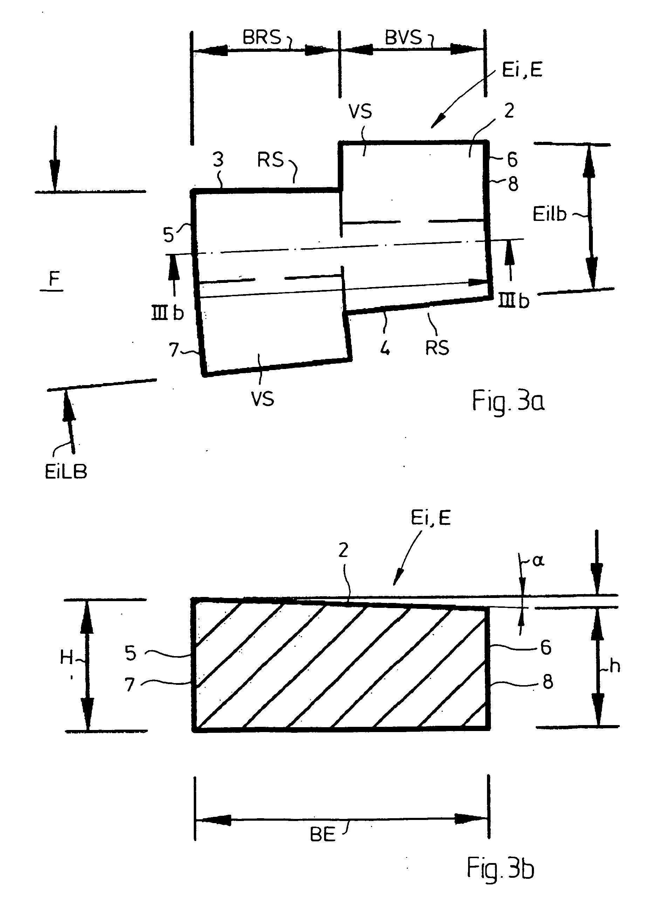

In der Figur 3a ist eine Draufsicht auf ein in Draufsicht trapezähnliches bzw. gebogenes inneres Rinnensteinelement Ei eines Rinnensteinsystems 1 dargestellt. Das Rinnensteinelement Ei weist eine Oberseite 2, zwei Stoßseiten 3, 4 und zwei Seitenflächen 5, 6 auf. Weiterhin weist das Rinnensteinelement Ei einen äußeren Bogenabschnitt 7 und einen inneren Bogenabschnitt 8 mit Bogenlängen EiLB = 19,63 cm bzw. Eilb 16,69 cm auf. Die Oberfläche 2 des Rinnensteinelements Ei neigt sich mit einem Neigungswinkel 5° > α > 1° und insbesondere α = 2,5° von der Seitenfläche 5 zur Seitenfläche 6 bzw. zum kurzen Bogenabschnitt 8 in eine Richtung x und verläuft somit entgegengesetzt zur Oberfläche des in den Figuren 2a und 2b dargestellten Rinnensteinelements Ea (siehe auch Figur 3b). An den Stoßflächen 3, 4 ist jeweils ein Vorsprung VS und ein Rücksprung RS ausgebildet. Die gebogene Seitenfläche 5, welche an eine Fahrfläche F angrenzt weist einen Radius r = 2 m auf. Somit weisen diejenigen Seitenflächen, mit welchen das äußere und das innere gebogene Rinnesteinelement die Fahrfläche begrenzen die selben Radien r auf.

Die Figur 3b zeigt einen Schnitt durch das in der Figur 3a dargestellte Rinnesteinelement Ei entlang einer Schnittlinie IIIb-IIIb. Dieses weist eine dem geraden Rinnensteinelement Eg und dem gebogenen äußeren Rinnensteinelement Ea entsprechende Breite BE auf.

Die in den Figuren 1a bis 3b dargestellten drei Rinnesteinelemente E weisen identische maximale Höhen H = 14 cm und minimale Höhen h = 12,75 cm auf (siehe Figuren 1b, 2b, 3b). Weiterhin sind die Vorsprungbreiten BVS =15 cm bzw. Rücksprungbreiten BRS = 15 cm der Rinnensteinelemente E identisch (siehe Figur 1a, 2a, 3a).

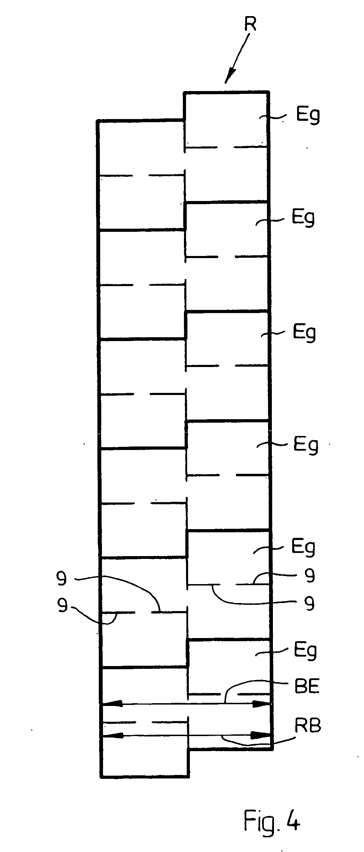

Die Figur 4 zeigt eine Draufsicht auf eine gerade verlaufende Rinne R, welche durch sechs gerade Rinnensteinelemente Eg gebildet ist. Die Rinne R weist eine Breite RB auf, welche der Breite BE der einzelnen Rinnensteinelemente Eg entspricht. Die Rinnensteinelemente Eg weisen weiterhin Scheinfugen 9 auf.

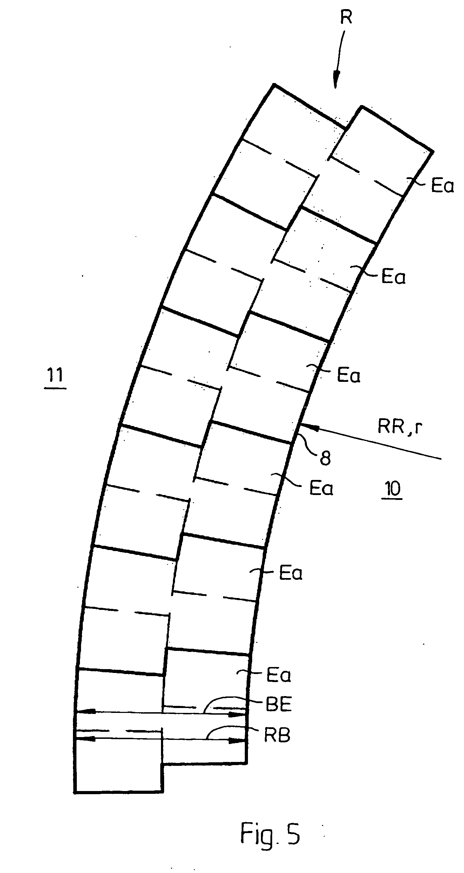

Die Figur 5 zeigt eine Draufsicht auf eine gekrümmt nach rechts verlaufende weitere Rinne R, welche durch sechs gebogene äußere Rinnensteinelemente Ea gebildet ist. Die Rinne R weist eine Breite RB auf, welche der Breite EB der Rinnensteinelemente Ea entspricht, und leitet von einer Fläche 10 kommendes Wasser beispielsweise auf eine Fläche 11 weiter. Sofern ununterbrochen Rinnensteinelemente Ea aneinandergereiht sind, definieren diese eine Rinne R mit einem Radius RR, welcher dem Radius r der inneren Bogenabschnitte 8 der Rinnensteinelemente Ea entspricht.

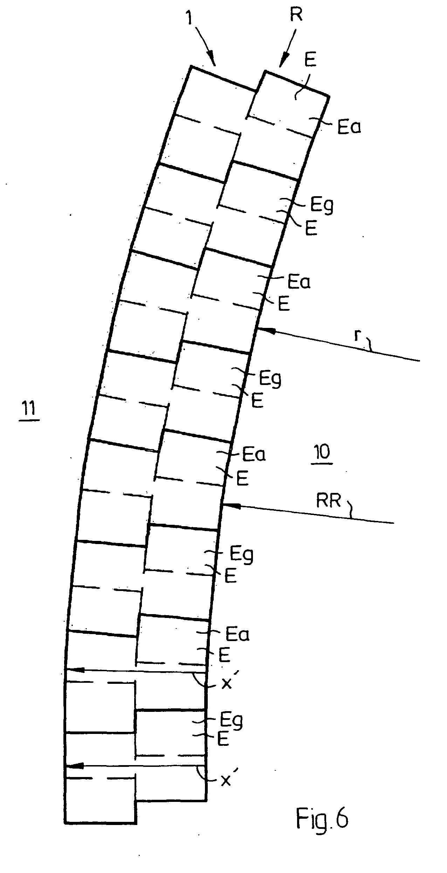

Die Figur 6 zeigt eine Draufsicht auf eine leicht gekrümmt nach rechts verlaufende dritte Rinne R, welche aus Rinnesteinelementen E eines Rinnensteinsystems 1 gebildet ist. Die Rinne ist durch vier gebogene äußere Rinnensteinelemente Ea und vier gerade Rinnensteinelemente Eg gebildet. Die Rinne R leitet von einer Fläche 10 kommendes Wasser beispielsweise auf eine Fläche 11 in eine Richtung x' weiter. Bei einem abwechselnden Verlegen der Rinnensteinelemente Eg und Ea gilt für das Verhältnis eines Radius RR der Rinne R zu einem Radius r eines inneren Bogenabschnitts 8 des Rinnensteinelements Ea etwa RR = 2 x r.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor beidseitig einer Fahrfläche s-förmige Rinnen zu verlegen.

### Bezugszeichenliste:

- 1: Rinnensteinsystem
- 2: Oberseite von E
- 3, 4: Stoßseite von E
- 5, 6: Seitenfläche von E
- 7: äußerer Bogenabschnitt 7 an Ea bzw. Ei
- 8: innerer Bogenabschnitt 8 an Ea bzw. Ei
- 9: Scheinfuge
- 10, 11: Fläche seitlich von R
- BE: Breite von E
- BRS, BVS: Breite von RS bzw. VS
- E: Rinnensteinelement von 1
- Eg: gerades Rinnensteinelement EG
- Ea: äußeres gebogenes Rinnensteinelement ETK
- Ei: inneres gebogenes Rinnensteinelement
- F: Fahrfläche
- H, h: maximale bzw. minimale Höhe von E
- L: Länge von Eg
- EaLB: Bogenlänge von 7 von Ea
- Ealb: Bogenlänge von 8 von Ea
- EiLB: Bogenlänge von 7 von Ei
- Eilb: Bogenlänge von 8 von Ei
- R: Rinne
- RB: Breite von R
- RR: Radius von R
- RS: Rücksprung an E
- r: Radius von 8 von Ea bzw. von 7 von Ei
- VS: Vorsprung an E
- x: Richtung der Neigung
- x': Richtung der Neigung
- α: Neigungswinkel von 2

## Patentansprüche

1. Rinnensteinsystem (1) mit geraden und gebogenen Rinnensteinelementen (E), welche sich über eine Breite (RB) einer zu erstellenden Rinne (R) erstrecken, wobei das Rinnensteinsystem (1) wenigstens drei unterschiedliche Rinnensteinelemente (E; Eg, Ea, Ei) aufweist, wobei jedes Rinnensteinelement (E; Eg, Ea, Ei) eine ebene Oberseite (2) aufweist, welche sich über die gesamte Breite (RB) der zu erstellenden Rinne (R) zu einer Seitenfläche (5, 6) des Rinnensteinelements (E; Eg, Ea, Ei) neigt, wobei das Rinnensteinsystem (1) gerade Rinnensteinelemente (Eg) umfasst und wobei das Rinnensteinsystem (1) trapezähnliche Rinnensteinelemente (Ei) umfasst, deren Oberseite (2) zu einem inneren kurzen Bogenabschnitt (8) geneigt ist, **dadurch gekennzeichnet, dass** das Rinnensteinsystem (1) trapezähnliche Rinnensteinelemente (Ea) umfasst, deren Oberseite (2) zu einem äußeren langen Bogenabschnitt (7) geneigt ist, wobei die Rinnensteinelemente (E) Scheinfugen (9) aufweisen.

2. Rinnensteinsystem nach Anspruch 1, **dadurch gekennzeichnet, dass** die geraden Rinnensteinelemente (Eg) eine Länge (L) von 10 cm bis 30 cm und insbesondere etwa 20 cm aufweisen.

3. Rinnensteinsystem nach einem der vorhergehenden Ansprüche, **dadurch gekennzeichnet, dass** der äußere Bogenabschnitt (7) des äußeren trapezähnlichen Rinnensteinelements (Ea) eine Bogenlänge (EaLB) von etwa 23 cm und der innere Bogenabschnitt (8) eine Bogenlänge (Ealb) von etwa 20 cm aufweist.

4. Rinnensteinsystem nach einem der vorhergehenden Ansprüche, **dadurch gekennzeichnet, dass** der äußere Bogenabschnitt (7) des trapezähnlichen, inneren Rinnensteinelements (Ei) eine Bogenlänge (EiLB) von etwa 20 cm und der innere Bogenabschnitt (8) eine Bogenlänge (Eilb) von etwa 17 cm aufweist.

5. Rinnensteinsystem nach einem der vorhergehenden Ansprüche, **dadurch gekennzeichnet, dass** der innere Bogenabschnitt (8) des äußeren trapezähnlichen Rinnesteinelements (Ea) und der äußere Bogenabschnitt (7) des inneren trapezähnliche Rinnensteinelements (Ei) einen Radius (r) von etwa 200 cm aufweisen.

6. Rinnensteinsystem nach einem der vorhergehenden Ansprüche, **dadurch gekennzeichnet, dass** die Rinnensteinelemente (E; Eg, Ea, Ei) zu Stoßseiten (3, 4) in einer Längsrichtung der Rinne (R) jeweils einen Vorsprung (VS) und einen Rücksprung (RS) aufweisen.

7. Rinnensteinsystem nach einem der vorhergehenden Ansprüche, **dadurch gekennzeichnet, dass** die Scheinfugen (9) der Rinnesteinelemente (E; Eg, Ea, Ei) des Rinnensteinsystems (1) eine Tiefe von etwa 3 mm bis 5 mm aufweisen.

8. Rinnensteinsystem nach einem der vorhergehenden Ansprüche, **dadurch gekennzeichnet, dass** die Oberseiten (2) der Rinnensteinelemente (E; Eg, Ea, Ei) einen Neigungswinkel α von etwa 1° bis 5° und insbesondere α = 2,5° aufweisen

## Claims

1. A gutter system (1) having straight and curved gutter elements (E) extending across a width (RB) of a gutter (R) to be created, wherein the gutter system (1) has at least three different gutter elements (E; Eg, Ea, Ei), wherein each gutter element (E; Eg, Ea, Ei) also has a plane surface (2) which is tilted toward a side surface (5, 6) of the gutter element (E; Eg, Ea, Ei) across the entire width (RB) of the gutter (R) to be created, wherein the gutter system (1) comprises straight gutter elements (Eg), and wherein the gutter system (1) comprises trapezoidal gutter Elements (Ei), the top surface (2) of which is tilted toward an internal short arch section (8), **characterized in that** the gutter system (1) comprises trapezoidal gutter elements (Ea), the top surface (2) of which is tilted toward an exterior long arch section (7), wherein the gutter elements (E) have concealed joints (9).

2. The gutter system according to claim 1, **characterized in that** the straight gutter elements (Eg) have a length (L) of 10 cm to 30 cm, in particular of about 20 cm.

3. The gutter system according to one of the previous claims, **characterized in that** the exterior arch section (7) of the exterior trapezoidal gutter element (Ea) has an arch length (EaLB) of about 23 cm, and the internal arch section (8) has an arch length (Ealb) of about 20 cm.

4. The gutter system according to one of the previous claims, **characterized in that** the exterior arch section (7) of the trapezoidal, internal gutter element (Ei) has an arch length (EiLB) of about 20 cm, and the internal arch section (8) has an arch length (Eilb) of about 17 cm.

5. The gutter system according to one of the previous claims, **characterized in that** the internal arch section (8) of the exterior trapezoidal gutter element (Ea), and the exterior arch section (7) of the internal trapezoidal gutter element (Ei) has a radius (r) of about 200 cm.

6. The gutter system according to one of the previous claims, **characterized in that** the gutter elements (E; Eg, Ea, Ei) each have a projection (VS) and a recess (RS) at scour sides (3, 4) in a longitudinal direction of the gutter (R).

7. The gutter system according to one of the previous claims, **characterized in that** the concealed joints (9) of the gutter elements (E; Eg, Ea, Ei) of the gutter system (1) have a depth of about 3 mm to 5 mm.

8. The gutter system according to one of the previous claims, **characterized in that** the top surfaces (2) of the gutter elements (E; Eg, Ea, Ei) have an inclination angle α of about 1° to 5°, and in particular α = 2.5°.

## Revendications

1. Système de caniveau pavé (1) comportant des éléments de pavement (E) droits et courbes, qui s'étendent sur une largeur (RB) d'un caniveau (R) à réaliser, le système de caniveau pavé (1) comportant au moins trois éléments de pavement (E ; Eg, Ea, Ei) différents, chaque élément de pavement (E ; Eg, Ea, Ei) comportant une face supérieure (2) plane, inclinée vers une face latérale (5, 6) de l'élément de pavement (E ; Eg, Ea, Ei) sur toute la largeur (RB) du caniveau (R) à réaliser, le système de caniveau pavé (1) comportant des éléments de pavement droits (Eg) et le système de caniveau pavé (1) comportant des éléments de pavement trapézoïdaux (Ei), dont la face supérieure (2) est inclinée vers une courte partie courbe intérieure (8), **caractérisé en ce que** le système de caniveau pavé (1) comporte des éléments de pavement trapézoïdaux (Ea) dont la face supérieure (2) est inclinée vers une longue partie courbe extérieure (7), les éléments de pavement (E) comportant des faux-joints (9).

2. Système de caniveau pavé selon la revendication 1, **caractérisé en ce que** les éléments de pavement droits (Eg) ont une longueur (L) de 10 cm à 30 cm et en particulier de 20 cm environ.

3. Système de caniveau pavé selon l'une quelconque des revendications précédentes, **caractérisé en ce que** la partie courbe extérieure (7) de l'élément de pavement trapézoïdal (Ea) extérieur a une longueur d'arc (EaLB) d'environ 23 cm, et la partie courbe intérieure (8) a une longueur d'arc (Ealb) d'environ 20 cm.

4. Système de caniveau pavé selon l'une quelconque des revendications précédentes, **caractérisé en ce que** la partie courbe extérieure (7) de l'élément de pavement trapézoïdal (Ei) intérieur possède une longueur d'arc (EiLB) d'environ 20 cm et la partie courbe intérieure (8) possède une longueur d'arc (Eilb) d'environ 17 cm.

5. Système de caniveau pavé selon l'une quelconque des revendications précédentes, **caractérisé en ce que** la partie courbe intérieure (8) de l'élément de pavement trapézoïdal (Ea) extérieur et la partie courbe extérieure (7) de l'élément de pavement trapézoïdal (Ei) intérieur ont un rayon (r) d'environ 200 cm.

6. Système de caniveau pavé selon l'une quelconque des revendications précédentes, **caractérisé en ce que** les éléments de pavement (E ; Eg, Ea, Ei) comportent au niveau des côtés de bordure (3, 4), dans une direction longitudinale du caniveau (R), respectivement une saillie (VS) et un retrait (RS).

7. Système de caniveau pavé selon l'une quelconque des revendications précédentes, **caractérisé en ce que** les faux-joints (9) des éléments de pavement (E ; Eg, Ea, Ei) du système de caniveau pavé (1) ont une profondeur de 3 mm à 5 mm environ.

8. Système de caniveau pavé selon l'une quelconque des revendications précédentes, **caractérisé en ce que** les faces supérieures (2) des éléments de pavement (E ; Eg, Ea, Ei) ont un angle d'inclinaison α de 1° à 5° environ, et en particulier α = 2,5°.
